Europäisches Patentamt

European Patent Office

Office européen des brevets

(11) Publication number: **0 051 861**
**B1**

(19)

## EUROPEAN PATENT SPECIFICATION

(45) Date of publication of patent specification: **02.03.88**

(51) Int. Cl.⁴: **G 05 B 19/417**

(21) Application number: **81109531.4**

(22) Date of filing: **05.11.81**

(54) **Unmanned diagnostic communications system for computer controlled machine tools.**

(30) Priority: **10.11.80 US 205102**

(43) Date of publication of application:
**19.05.82 Bulletin 82/20**

(45) Publication of the grant of the patent:
**02.03.88 Bulletin 88/09**

(84) Designated Contracting States:
**AT BE CH DE FR GB IT LI LU NL SE**

(56) References cited:
**US-A-3 882 305**
**US-A-4 287 567**
**US-A-4 296 756**
**US-A-4 310 884**

(73) Proprietor: **KEARNEY & TRECKER CORPORATION**
**11000 Theodore Trecker Way**
**West Allis Wisconsin 53214 (US)**

(72) Inventor: **Johnstone, Richard**
**20300 West Gebhardt Road**
**Brookfield Wisconsin 53005 (US)**

(74) Representative: **Baillie, Iain Cameron et al**
**c/o Ladas & Parry Isartorplatz 5**
**D-8000 München 2 (DE)**

Courier Press, Leamington Spa, England.

**Description**

This invention relates to computer controlled machine tools, and more specifically to an unmanned diagnostic control apparatus for automatically analyzing computer controlled machine tool operation and to diagnose any abnormalities disclosed during machine tool operation.

With the advent of computer controlled machine tools, machining operations which heretofore had been performed by a skilled machinist, can now be performed automatically by the machine tool in accordance with programmed instructions executed by the machine tool control system computer. In addition to reducing direct labor costs, use of computer controlled machine tools assures part uniformity because for so long as the computer controlling the machine tool executes the same program, each part produced by the machine will be identical to each preceding part produced thereby.

Due to their tremendous sophistication, such computer controlled. machine tools are often quite complex. Although great care is taken during design to assure trouble-free computer controlled machine tool operation for long intervals, should a malfunction develop, machine tool complexity often forces skilled repair personnel to expend considerable effort and time to diagnose the cause of the machine tool malfunction. Since the per hour charge of such skilled repair personnel is often costly, and since machine down time often results in production delays which are very costly too, it is very important that the diagnosis and correction of machine tool malfunctions be made as quickly as possible.

To facilitate rapid diagnosis of machine tool malfunctions, we developed the diagnostic communications system described in U.S. Patent 3,882,305. The diagnostic communications system described therein includes a pair of MODEMS, that is, modulator/demodulators, for coupling a remotely situated computer controlled machine tool across a communication channel to a diagnostic computer which stores diagnostic programs for analyzing the operation of the remotely situated computer controlled machine tool. In operation, linkage is established between the remotely situated computer controlled machine tool and the centrally located diagnostic computer by voice communication between the machine tool operator and the computer analyst at the diagnostic site. Thereafter, both the computer analyst and the machine tool operator condition their corresponding modems to enable digitally encoded information to be transmitted between the diagnostic computer and the remotely situated computer controlled machine tool. The digitally encoded information consists of instructions transmitted from the diagnostic computer to the computer controlled machine tool and machine tool characteristics, sensed during machine tool operation responsive to the previously received instructions from the central diagnostic computer, which are transmitted from the machine tool to the diagnostic computer.

One of the drawbacks associated with the diagnostic communication system described in our U.S. Patent 3,882,305 is that an analyst must be present at the diagnostic computer site to facilitate communication between the remotely situated computer controlled machine tool and the diagnostic computer. If it were possible to automatically establish communications between the diagrnostic computer and the remotely situated computer controlled machine tool in response to a test command entered to the remotely situated computer controlled machine tool by an operator upon detection of any abnormality which is disclosed during machine tool operation, then the need for an analyst at the diagnostic computer site could be obviated or, the analyst could be freed to perform other duties, thereby effecting a sizable savings in labor costs.

Accordingly, the object of the present invention is to provide an unmanned diagnostic communication computer system for automatically analyzing the operation of a computer controlled machine tool and for diagnosing machine tool abnormalities during machine tool operation.

The present invention provides a system for automatically analyzing the operation of a computer controlled machine tool and for diagnosing abnormalities disclosed during machine tool operation; comprising a computer for controlling the machine tool, a communication channel and a diagnostic circuit remote from the machine tool and capable of unmanned operation, said diagnostic circuit comprising a diagnostic computer connectable by said communication channel to the machine tool computer, a first memory coupled to said diagnostic computer for storing data representing the identification of a plurality of machine tools qualified to be diagnosed by the system as well as the characteristics and test histories of the individual identified machine tools, a second memory storing diagnostic programs for transmittal to the machine tool computer for operating the machine tool to generate test data representing the operating condition of the machine tool, and a third memory storing analytic programs for analyzing the test data generated by the machine tool, characterized by means responsive to an entry into the machine tool computer by the machine tool operator to couple said communication channel between the machine tool computer and said diagnostic computer, means in said diagnostic computer responsive to the coupling of the communication channel for transmitting diagnostic programs to said machine tool computer for operating the machine tool in accordance with said programs for generating test data that can be analyzed, means in said machine tool computer for transmitting the machine tool identification and the test data generated by the operation of the machine tool through said communication channel to said diagnostic computer, and means in said diagnostic computer responsive to the receipt of said data to obtain the data relating to the identified machine tool from said first memory, means in said diagnostic computer responsive to the test data and the data from said first memory to process the information received in accordance with the analytic programs stored in said third memory for determining the defective elements of the machine tool, and means in said diagnostic computer for transmitting test data representing the results of said analysis to the machine tool computer so that the test data can be displayed at the machine tool for the information of the machine tool operator.

In accordance with the preferred embodiment, the means for automatically establishing the communication link between the diagnostic communication system and the remotely situated computer comprise an auto dialer and MODEM connected to the remotely situated computer controlled machine tool and, an automatic answering MODEM coupled to the diagnostic computer, to automaically initiate a communications link across a communications channel such as a telephone link, between the diagnostic computer and the remotely situated computer controlled machine tool in response to an operator initiated test command entered to the computer controlled machine tool. Following establishment of the communication link, the diagnostic computer interrogates the remotely situated computer controlled machine tool to ascertain its identity. Once the diagnostic computer is provided with information from the remotely situated computer controlled machine tool indicative of its identity, the diagnostic computer transmits control instructions to the computer controlled machine tool and, thereafter, receives information from the machine tool indicative of machine tool operating characteristics. By monitoring machine tool operation, the diagnostic computer can, in accordance with stored programs, diagnose any machine tool abnormalities disclosed during machine tool operations.

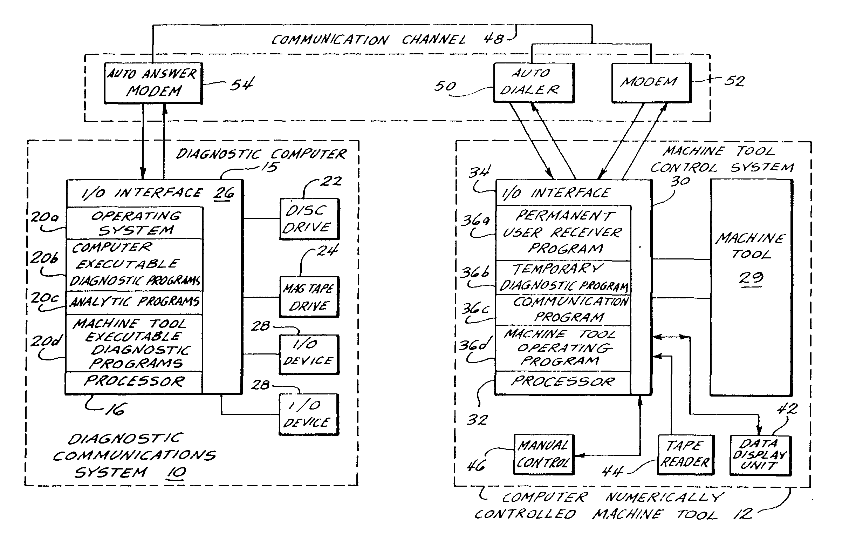

In the drawings, Figure 1 is a block diagram of the diagnostic communication system according to the present invention.

Figure 1 illustrates the preferred embodiment of an unmanned diagnostic communications computer system 10 for monitoring the operation of a computer numerically controlled machining center such as CNC machining center 12, following an operator initiated test command entered to the CNC machining center. In the presently preferred embodiment, diagnostic computer system 10 includes a diagnostic computer 15, configured substantially identical to the diagnostic computer described in our U.S. Patent 3,882,305, and includes an electronic processor 16 which is coupled to four memory blocks 20a, 20b, 20c, and 20d, respectively, containing an operating system, a set of computer executable diagnostic programs, a set of analytical programs and a set of machine tool executable diagnostic programs, respectively.

In addition to being coupled to memory blocks 20a through 20d, processor 16 is coupled to a disk drive 22 and to a magnetic tape drive 24 through an I/O interface 26. Disk drive 22 serves as the primary means for storing information concerning each of the CNC machining centers which may be interfaced to the diagnostic computer system for diagnostic analysis. The information on disk 22 concerning each CNC machining center includes data indicative of the machine type as well as machine design limit parameter data and data indicative of previously obtained machine operating characteristics which data, is referenced by the CNC machinery center serial number. Magnetic tape drive 24 serves as a backup memory for disk drive 22 and may also be employed to initially input, and thereafter update, the programs stored in each of the memory blocks 20a, 20b, 20c, and 20d. Even though diagnostic computer system 10 is designed for unmanned operation, it may be advantageous to configure diagnostic computer system 10 with one or more input/output devices 28, such as a CRT display, a high speed printer or a keyboard printer, all coupled through I/O interface 26 to processor 16. I/O devices 28 enable an analyst, if present, to monitor diagnostic computer 15 and CNC machining center 14 operation.

Each of the computer numerically controlled machining centers interfaced with diagnostic computer system 10 takes the form of computer numerically controlled machining center 12 and includes a machine tool 29 which is coupled to and controlled by a machine tool control system 30. Although machine tool control system 30 may take the form of any well known machine tool control system, in the presently preferred embodiment, machine tool control system 30 is comprised of a KT/CNC control system manufactured by Kearney & Trecker Corporation and includes a processor 32 which is coupled through an I/O interface 34 to machine tool 29. Processor 32 is coupled to four memory blocks 36a through 36d which stores a permanent user receiver program, a temporary diagnostic program, a communication program and a machine tool operating program, respectively.

Input/output (I/O) interface 34 also couples processor 32 to each of data display unit 42, tape reader 44 and manual controls 46. Tape reader 44 serves as the means by which each of the four programs stored in memory blocks 36a through 36d, respectively, is initially entered, and thereafter updated. Output data generated during machine operation, is displayed on display unit 42, typically comprised of a cathode ray tube or plasma display, to the machine tool operator. In response to data displayed on display unit 42, operator-initiated commands can be entered to processor 32 through manual controls 46. It is through manual controls 46 that a test command is entered to processor 32 to initiate interface with diagnostic communications system 10.

To establish a communication link between CNC machine tool 12 and diagnostic communication system 10 across a communication channel 48, such as a long distancce telephone line or a microwave channel connected at each end to a local telephone link, in response to an operated-initiated test command entered through manual controls 46, an auto dialer 50 and a communication modulator/demodulator (MODEM) 52 are each coupled between one end of communication channel 48 and I/O interface 34 of CNC machine tool 12. A MODEM 54 is coupled between the other end of communications channel 48 and I/O interface 26 of diagnostic communication system 10. In response to a command from processor 32, as transmitted to the auto dialer through I/O interface 34, auto dialer 50 automatically accesses auto answer MODEM 54 through communications channel 48 by transmitting a unique identifying code (the telephone number of auto answer MODEM 54) across communications channel 48. Auto answer MODEM 54 automatically responds to the identifying code transmitted by auto dialer 50 and, following transmission of the identifying code, the auto answer MODEM automatically interfaces diagnostic computer 15 to communications channel 48 to permit transmission of data thereacross between diagnostic communication system 10 and CNC machine tool 12.   .

The diagnostic communications system of the present invention operates in the following manner. It is initially assumed that processor 32 of machine tool control system 30 is initially executing the machine tool operating program stored in memory block 36d to direct the operation of machine tool 29. If, during the execution of the machine tool operating program, a malfunction in either the machine tool or the machine tool control system occurs, then the machine tool operator enters a test command through manual controls 46 to processor 32. In response, processor 32 commences execution of the permanent user receiver program stored in memory block 36a. The permanent user receiver program stored in memory block 36a is substantially identical to the permanent user receiver program described in my U.S. Patent 3,882,305, and when executed by processor 32, it causes auto dialer 50 to access auto answer MODEM 54 through communication channel 48.

Once a communication link is established across communication channel 48 between processor 32 of CNC machine tool 14 and processor 16 of diagnostic computer 15, then processor 32 commences execution of the communications program stored in memory block 36c. The communication program stored in memory block 36c is substantially identical to the communications program described in my previously identified patent and controls the operation of MODEM 52 which, in combination with auto answer MODEM 54 and communication channel 48, carries the computer executable diagnostic programs and the machine tool executable diagnostic programs stored in memory blocks 20b and 20d, respectively, of diagnostic computer 15 to machine tool control system 30 which stores the program in memory block 36b. The computer executable diagnostic program and the machine tool executable diagnostic program are substantially identical to the computer executable diagnostic program and the machine tool executable diagnostic program, respectively described in my previously identified patent, and when executed by processor 32, they cause both machine tool 28 and processor 32, respectively, to generate data indicative of machine tool and machine tool control system operating characteristics, respectively, which data is then transmitted across communication channel 48 to diagnostic computer 15. Processor 16 of diagnostic computer 15 analyzes the diagnostic data in accordance with the analytic programs stored in memory block 20c, which programs, are substantially identical to the analytic programs described in my previously identified patent. Following analysis of the machine tool and machine tool control system data, information, indicative of the machine tool malfunction, is thereafter transmitted across communication channel 48 to machine tool control system 30 for display on data display unit 42 to an operator. In accordance with the diagnostic information displayed on display unit 42, appropriate measures can then be undertaken to correct any machine tool or machine tool control system malfunction, thereby permitting rapid return to a re-execution of the machine tool operating program.

The foregoing describes an unmanned diagnostic communication system for analyzing machine tool operating data and to diagnose any machine tool malfunctions identified by such data. By employing means in the form of an auto dialer, an auto answer MODEM, a communications link between the machine tool, the diagnostic communication system can be established automatically therebetween, thereby obviating the need to manually establish such linkage.

Although the illustrative embodiment of the invention has been described in considerable detail for the purpose of fully disclosing a practical operative structure incorporating the invention, it is to be understood that the particular apparatus shown and described is intended to be illustrative only.

## Claims

1. A system for automatically analyzing the operation of a computer controlled machine tool and for diagnosing abnormalities disclosed during machine tool operation; comprising a computer (30) for controlling the machine tool, a communication channel (48) and a diagnostic circuit remote from the machine tool and capable of unmanned operation, said diagnostic circuit comprising a diagnostic computer (15) connectible by said communication channel to the machine tool computer, a first memory (22) coupled to said diagnostic computer for storing data representing the identification of a plurality of machine tools qualified to be diagnosed by the system as well as the characteristics and test histories of the individual identified machine tools, a second memory (20b, 20d) storing diagnostic programs for transmittal to the machine tool computer for operating the machine tool to generate test data representing the operating condition of the machine tool, and a third memory (20c) storing analytic programs for analyzing the test data generated by the machine tool, characterized by means responsive to an entry into the machine tool computer by the machine tool operator to couple said communication channel between the machine tool computer and said diagnostic computer, means in said diagnostic computer responsive to the coupling of the communication channel for transmitting diagnostic programs to said machine tool computer for operating the machine tool in accordance with said programs for generating test data that can be analyzed, means in said machine tool computer for transmitting the machine tool identification and the test data generated by the operation of the machine tool through said communication channel (48) to said diagnostic computer (15), and means in said diagnostic computer responsive to the receipt of said data to obtain the data relating to the identified machine tool from said first memory, means in said diagnostic computer responsive to the test data and the data from said first memory to process the information received in accordance with the analytic programs stored in said third memory for determining the defective elements of the machine tool, and means in said diagnostic computer for transmitting test data representing the results of said analysis to the machine tool computer so that the test data can be displayed at the machine tool for the information of the machine tool operator.

2. A system according to claim 1 wherein said second memory comprises two separate memories, the first (20b) of which stores computer executable diagnostic programs for testing the operation of the machine tool computer (30) and the second of which (20d) stores machine tool executable diagnostic programs for testing the operation of the machine tool.

3. A system according to claim 1 wherein the machine tool computer includes a diagnostic memory (36b) for storing the diagnostic programs transmitted by said diagnostic computer, and means for transmitting the program data contained in said diagnostic memory for operating the machine tool so that the machine tool will generate the required test data.

**Patentansprüche**

1. System zum automatischen Analysieren des Betriebes einer computergesteuerten Werkzeugmaschine und zur Diagnose von während des Betriebes der Werkzeugmaschine erkannten Abnormitäten, mit einem Computer (30) zur Steuerung der Werkzeugmaschine, einem Übertragungskanal (48) und einer von der Werkzeugmaschine entfernt angeordneten Diagnoseschaltung, die für einen bedienungsfreien Betrieb geeignet ist und einen Diagnosecomputer (15) umfaßt, der durch den Übertragungskanal mit dem Computer der Werkzeugmaschine verbindbar ist, einen mit dem Diagnosecomputer gekoppelten, ersten Speicher (22) zum Speichern der Identifikation einer Mehrzahl von Werkzeugmaschinen, die mit dem System diagnostizierbar sind, und der Eigenschaften und Prüfungsgeschichte der einzelnen identifizierten Werkzeugmaschinen, einen zweiten Speicher (20b, 20d) zum Speichern von Diagnoseprogrammen zur Übertragung zu dem Computer der Werkzeugmaschine für einen Betrieb der Werkzeugmaschine unter Erzeugung von Prüfdaten, die den Betriebszustand der Werkzeugmaschine darstellen, und einen dritten Speicher (20c) zum Speichern von Analyseprogrammen zur Analyse der von der Werkzeugmaschine erzeugten Prüfdaten, gekennzeichnet durch eine Einrichtung, die auf Grund einer von der Bedienungsperson der Werkzeugmaschine vorgenommenen Eingabe in den Computer der Werkzeugmaschine den Übertragungskanal zwischen dem Computer der Werkzeugmaschine und dem Diagnosecomputer durchschaltet, eine in dem Diagnosecomputer vorgesehene Einrichtung, die auf Grund des Durchschaltens des Übertragungskanals zu dem Rechner der Werkzeugmaschine Diagnoseprogramm für den Betrieb der Werkzeugmaschine gemäß den Programmen unter Erzeugung von analysierbaren Prüfdaten überträgt, eine in dem Computer der Werkzeugmaschine vorgesehene Einrichtung zum Übertragen der Identifikation der Werkzeugmaschine und der durch den Betrieb der Werkzeugmaschine erzeugten Prüfdaten über den Übertragungskanal (48) an den Diagnosecomputer (15), eine in dem Diagnosecomputer vorgesehene Einrichtung, die auf Grund des Empfangs der genannten Daten aus dem ersten Speicher die die identifizierte Werkzeugmaschine betreffenden Daten abruft, eine in dem Diagnosecomputer vorgesehene Einrichtung, die auf Grund der Prüfdaten und der aus dem ersten Speicher abgerufenen Daten die Information verarbeitet, die gemäß dem in dem dritten Speicher gespeicherten Analyseprogramm empfangen wurde und dadurch die fehlerhaften Elemente der Werkzeugmaschine bestimmt, und eine in dem Diagnosecomputer vorgesehene Einrichtung zum Übertragen von die Ergebnisse dieser Analyse darstellenden Daten zu dem Computer der Werkzeugmaschine, so daß die Prüfdaten zur Information der Bedienungsperson der Werkzeugmaschine an dieser angezeigt werden können.

2. System nach Anspruch 2, dadurch gekennzeichnet, daß der zweite Speicher zwei getrennte Speicher besitzt, in deren erstem (20b) von Computer durchführbare Diagnoseprogramme für Prüfen des Betriebes des Computers (30) der Werkzeugmaschine speicherbar sind und in deren zweitem (20d) von einer Werkzeugmaschine durchführbare Diagnoseprogramme zum Prüfen des Betriebes des Werkzeugmaschine speicherbar sind.

3. System nach Anspruch 1, dadurch gekennzeichnet, daß der Computer der Werkzeugmaschine einen Diagnosespeicher (36b) besitzt, der zum Übertragen der in dem Diagnosespeicher gespeicherten Programmdaten für den Betrieb der Werkzeugmaschine dient, so daß diese die erforderlichen Prüfdaten erzeugt.

**Revendications**

1. Système destiné à analyser automatiquement le fonctionnement d'une machine-outil à commande par ordinateur et à diagnostiquer les anomalies découvertes pendant le fonctionnement de la machine-outil; comprenant un ordinateur (30) servant à commander la machine-outil, un canal de communication (48) et un circuit de diagnostic situé à distance de la machine-outil et capable de travailler sans opérateur, ledit circuit de diagnostic comprenant un ordinateur de diagnostic (15) qui peut être connecté à l'ordinateur de la machine-outil par ledit canal de communication, une première mémoire (22) couplée audit ordinateur de diagnostic pour mémoriser des données représentant l'identification d'une pluralité de machines-outils qualifiées pour être diagnostiquées par le système aussi bien que les caractéristiques et historiques d'essais des machines-outils individuelles identifiées, une deuxième mémoire (20b, 20d) qui mémorise des programmes de diagnostic destinés à être transmis à l'ordinateur de la machine-outil pour faire travailler la machine-outil de manière à engendrer des données d'essais qui représentent l'état de fonctionnement de la machine-outil, et une troisième mémoire (20c) qui mémorise les programmes analytiques pour analyser des données d'essais engendrées par la machine-outil, caractérisé par des moyens qui répondent à une entrée exécutée par l'opérateur de la machine-outil dans l'ordinateur de machine-outil en couplant ledit canal de communication entre l'ordinateur de la machine-outil et ledit ordinateur de diagnostic, des moyens contenus dans ledit ordinateur de diagnostic et qui répondent au couplage du canal de communication en transmettant des programmes de diagnostic audit ordinateur de la machine-outil pour faire travailler la machine-outil en fonction desdits programmes afin d'engendrer des données d'essais qui peuvent être analysées, des moyens prévus dans ledit ordinateur de la machine-outil pour transmettre l'identification de la machine-outil et les données d'essais engendrées par le fonctionnement de la machine-outil audit ordinateur de diagnostic par l'intermédiaire dudit canal de communication (48), et des moyens contenus dans ledit ordinateur de diagnostic (15) et qui répondent à la réception desdites données en tirant de la première mémoire les données relatives à la machine-outil identifiée, des moyens contenus dans ledit ordinateur de diagnostic et qui répondent aux données d'essais et aux données issues de ladite première mémoire en traitant l'information reçue en fonction des programmes analytiques mémorisés dans ladite troisième mémoire, pour déterminer les éléments défectueux de la machine-outil et des moyens contenus dans ledit ordinateur de diagnostic pour transmettre des données d'essais représentant les résultats de ladite analyse à l'ordinateur de la machine-outil de telle manière que les données d'essais puissent être affichées sur la machine-outil pour l'information de l'opérateur de la machine-outil.

2. Système selon la revendication 1, dans lequel ladite deuxième mémoire comprend deux mémoires séparées dont la première (20b) mémorise des programmes de diagnostic exécutables par ordinateur, pour tester le fonctionnement de l'ordinateur (30) de la machine-outil et dont la deuxième (20d) mémorise des programmes de diagnostic exécutables par la machine-outil pour tester le fonctionnement de la machine-outil.

3. Système selon la revendication 1, dans lequel l'ordinateur de la machine-outil comprend une mémoire de diagnostic (36b) destinée à mémoriser les programmes de diagnostic transmis par ledit ordinateur de diagnostic et des moyens pour transmettre les données de programme continues dans ladite mémoire de diagnostic pour faire fonctionner la machine-outil de telle manière que la machine-outil engendre les données d'essais voulues.

COMMUNICATION CHANNEL 48

AUTO ANSWER MODEM ~ 54

50 — AUTO DIALER

MODEM ~ 52

DIAGNOSTIC COMPUTER ~ 15

I/O INTERFACE 26

22 — DISC DRIVE

20a — OPERATING SYSTEM

20b — COMPUTER EXECUTABLE DIAGNOSTIC PROGRAMS

20c — ANALYTIC PROGRAMS

24 — MAG TAPE DRIVE

20d — MACHINE TOOL EXECUTABLE DIAGNOSTIC PROGRAMS

PROCESSOR

16

28 — I/O DEVICE

28 — I/O DEVICE

DIAGNOSTIC COMMUNICATIONS SYSTEM 10

MACHINE TOOL CONTROL SYSTEM

34 — I/O INTERFACE

30

36a — PERMANENT USER RECEIVER PROGRAM

MACHINE TOOL 29

36b — TEMPORARY DIAGNOSTIC PROGRAM

36c — COMMUNICATION PROGRAM

36d — MACHINE TOOL OPERATING PROGRAM

PROCESSOR

32

46 — MANUAL CONTROL

44

TAPE READER

42 — DATA DISPLAY UNIT

COMPUTER NUMERICALLY CONTROLLED MACHINE TOOL 12

0 051 861